# EUROPEAN PATENT APPLICATION

(11) **EP 4 582 204 A1**
(43) Date of publication of application: **09.07.2025**
(21) Application number: 22957308.4
(22) Date of filing: 29.08.2022
(51) Int. Cl.: B23C 9/00, B23Q 17/09

(54) **MILLING TOOL, MILLING TOOL SYSTEM, AND SENSOR DEVICE**

(71) Applicant: SUMITOMO ELECTRIC INDUSTRIES, LTD., Osaka-shi, Osaka 541-0041 (JP)
(72) Inventor: OHMORI, Hiroki, Osaka-shi, Osaka 541-0041 (JP); KOIKE, Yusuke, Osaka-shi, Osaka 541-0041 (JP)
(74) Representative: Boult Wade Tennant LLP
(86) International application number: PCT/JP2022/032428
(87) International publication number: WO 2024/047704

(57) **Abstract**

The rotating tool is a rotating tool that includes a shaft portion extending from a first end to a second end along a rotation axis, a sensor unit disposed on the shaft portion, and a cutting edge disposed around the rotation axis of the shaft portion. The sensor unit includes a sensor module, the sensor module including a first sensor that detects a first physical quantity of the shaft portion, a base member, and an antenna that is mounted on a first surface of the base member and externally transmits a signal containing information on the first physical quantity detected by the first sensor. The antenna is a chip antenna or a PCB antenna. In a cross section including the rotation axis, a first direction as a direction perpendicular to the first surface is inclined with respect to a plane perpendicular to the rotation axis and with respect to the rotation axis.

## Description

### Technical Field

The present disclosure relates to a rotating tool, a rotating tool system, and a sensor device.

### Background Art

Techniques for monitoring the state of a cutting tool during machining with the cutting tool by measuring a physical quantity of the cutting tool using a sensor are known (see, for example, U.S. Patent Application Publication No. 2015/0261207 (Patent Literature 1), Japanese Patent Application Laid-Open No. 2018-54611 (Patent Literature 2), Japanese Patent Application Laid-Open No. 2009-285804 (Patent Literature 3), International Publication WO 2017/002762 (Patent Literature 4), Japanese Patent No. 5988066 (Patent Literature 5), Japanese Utility Model Registration No. 3170029 (Patent Literature 6), Japanese Patent Application Laid-Open No. 2015-77658 (Patent Literature 7), International Publication WO 2015/056495 (Patent Literature 8), European Patent Application Publication No. 3292929 (Patent Literature 9), and European Patent Application Publication No. 3292930 (Patent Literature 10)).

### Citation List

### Patent Literature

Patent Literature 1: U.S. Patent Application Publication No. 2015/0261207
Patent Literature 2: Japanese Patent Application Laid-Open No. 2018-54611
Patent Literature 3: Japanese Patent Application Laid-Open No. 2009-285804
Patent Literature 4: International Publication WO 2017/002762
Patent Literature 5: Japanese Patent Application Laid-Open No. 2016-221665
Patent Literature 6: Japanese Utility Model Registration No. 3170029
Patent Literature 7: Japanese Patent Application Laid-Open No. 2015-77658
Patent Literature 8: International Publication WO 2015/056495
Patent Literature 9: European Patent Application Publication No. 3292929
Patent Literature 10: European Patent Application Publication No. 3292930

### Summary of Invention

The rotating tool according to the present disclosure is a rotating tool that includes: a shaft portion extending from a first end to a second end along a rotation axis; a sensor unit disposed on the shaft portion; and a cutting edge disposed around the rotation axis of the shaft portion. The sensor unit includes a sensor module, the sensor module including a first sensor that detects a first physical quantity of the shaft portion, a base member, and an antenna that is mounted on a first surface of the base member and externally transmits a signal containing information on the first physical quantity detected by the first sensor. The antenna is a chip antenna or a PCB antenna. In a cross section including the rotation axis, a first direction as a direction perpendicular to the first surface is inclined with respect to a plane perpendicular to the rotation axis and with respect to the rotation axis.

### Brief Description of Drawings

[FIG. 1] FIG. 1 is a schematic perspective view showing the structure of a rotating tool.
[FIG. 2] FIG. 2 is a schematic perspective view showing the structure of a shaft portion.
[FIG. 3] FIG. 3 is a schematic perspective view showing the structure of the shaft portion, as viewed from a different point of view from FIG. 2.
[FIG. 4] FIG. 4 is a schematic plan view showing the structure of the shaft portion as viewed from a first end side in a rotation axis direction.
[FIG. 5] FIG. 5 is a schematic plan view showing the structure of the shaft portion as viewed from a second end side in the rotation axis direction.
[FIG. 6] FIG. 6 is a schematic plan view showing the structure of the shaft portion as viewed in a direction perpendicular to the axis direction.
[FIG. 7] FIG. 7 is a schematic cross-sectional view showing a cross section along the line VII-VII in FIG. 5.
[FIG. 8] FIG. 8 is a schematic cross-sectional view showing the structure of a sensor unit and its surroundings.
[FIG. 9] FIG. 9 is a schematic perspective view showing the structure of a strain sensor component.
[FIG. 10] FIG. 10 is a schematic plan view showing the structure of a board module.
[FIG. 11] FIG. 11 is a schematic cross-sectional view showing a cross section along the line XI-XI in FIG. 10.
[FIG. 12] FIG. 12 is a schematic cross-sectional view showing a cross section along the line XII-XII in FIG. 10.
[FIG. 13] FIG. 13 is a schematic plan view showing a state in which the board module is attached.
[FIG. 14] FIG. 14 is a schematic cross-sectional view showing a cross section along the line XIV-XIV in FIG. 13.
[FIG. 15] FIG. 15 is a schematic cross-sectional view showing a cross section along the line XV-XV in FIG. 13.
[FIG. 16] FIG. 16 is a schematic perspective view showing the structure of a housing main body.
[FIG. 17] FIG. 17 is a schematic perspective view showing the structure of a first fixing member.
[FIG. 18] FIG. 18 is a schematic perspective view showing the structure of a second fixing member.
[FIG. 19] FIG. 19 is a schematic perspective view showing the structure of a lid (bottom wall portion).
[FIG. 20] FIG. 20 is a schematic perspective view showing the structure of a rotating tool of Embodiment 2.
[FIG. 21] FIG. 21 is a schematic perspective view showing the structure of a rotating tool of Embodiment 3.
[FIG. 22] FIG. 22 is a schematic perspective view showing the structure of a rotating tool of Embodiment 4.
[FIG. 23] FIG. 23 is a schematic perspective view showing the rotating tool of Embodiment 4 in a disassembled state.
[FIG. 24] FIG. 24 is a schematic diagram showing the configuration of a rotating tool system of Embodiment 5.

### Description of Embodiments

### [Problems to be Solved by Present Disclosure]

From the viewpoint of closely monitoring the state of the cutting tool during machining, it is required that signals containing information obtained by a sensor be received in an externally installed receiver while suppressing the loss of the information. One of the objects of the present disclosure is to provide a rotating tool, a rotating tool system, and a sensor device that facilitate the reception of signals containing information obtained by a sensor in an externally installed receiver while suppressing the loss of the information.

### [Advantageous Effects of Present Disclosure]

According to the rotating tool, the rotating tool system, and the sensor device of the present disclosure, it is possible to provide a rotating tool, a rotating tool system, and a sensor device that facilitate the reception of signals containing information obtained by a sensor in an externally installed receiver while suppressing the loss of the information.

### [Description of Embodiments of Present Disclosure]

Embodiments of the present disclosure will first be listed and described. The rotating tool of the present disclosure is a rotating tool that includes: a shaft portion extending from a first end to a second end along a rotation axis; a sensor unit disposed on the shaft portion; and a cutting edge disposed around the rotation axis of the shaft portion. The sensor unit includes a sensor module, the sensor module including a first sensor that detects a first physical quantity of the shaft portion, a base member, and an antenna that is mounted on a first surface of the base member and externally transmits a signal containing information on the first physical quantity detected by the first sensor. The antenna is a chip antenna or a PCB antenna. In a cross section including the rotation axis, a first direction as a direction perpendicular to the first surface is inclined with respect to a plane perpendicular to the rotation axis and with respect to the rotation axis.

In a rotating tool that cuts a workpiece by rotating around the rotation axis of a shaft portion, when a signal containing information obtained by a sensor is received in an externally installed receiver, the information tends to be lost to a large extent. According to studies conducted by the present inventors, this is due to the following reasons. A chip antenna or a PCB antenna (transmitting antenna) included in the rotating tool is mounted on a mounting surface (first surface) of a base member included in the rotating tool. At this time, from the viewpoint of ease of installation of a communication module including the transmitting antenna, a direction perpendicular to the mounting surface tends to be parallel or perpendicular to a plane perpendicular to the rotation axis of the shaft portion. In addition, from the viewpoint of ease of installation of a receiver including a linear antenna (receiving antenna), such as a monopole antenna or a dipole antenna, that receives the signal transmitted, the receiver tends to be installed such that a longitudinal direction of the linear antenna included therein is parallel or perpendicular to the plane perpendicular to the rotation axis of the shaft portion. Then, with the rotation of the rotating tool around the rotation axis, a moment may occur when the direction perpendicular to the mounting surface for the transmitting antenna becomes orthogonal to the longitudinal direction of the receiving antenna. At such a moment, the electric field intensity of a polarized radio wave in a direction easier for the receiving antenna to receive becomes extremely weak in the transmitted signal. This results in a significant loss of information in the information received at the receiving antenna, as compared to the information contained in the transmitted signal.

In the rotating tool of the present disclosure, the first direction, which is the direction perpendicular to the first surface of the base member on which the transmitting antenna is mounted, is inclined with respect to both the plane perpendicular to the rotation axis and the rotation axis. This can avoid the occurrence of a moment at which the electric field intensity of a polarized radio wave in a direction easier for the receiving antenna to receive becomes extremely weak. As a result, it becomes easier for an externally installed receiver to receive signals containing information obtained by a sensor, while suppressing the loss of the information.

In the above rotating tool, an angle formed by the plane perpendicular to the rotation axis and the first direction may be not less than 5 degrees and not more than 85 degrees. This configuration can further suppress the loss of the information obtained by the sensor. As used herein, the angle formed by the plane perpendicular to the rotation axis and the first direction means an angle that forms the acute of the angles formed by the plane perpendicular to the rotation axis and the first direction.

In the above rotating tool, the angle formed by the plane perpendicular to the rotation axis and the first direction may be not less than 15 degrees and not more than 75 degrees. This configuration can even further suppress the loss of the information obtained by the sensor.

In the above rotating tool, the angle formed by the plane perpendicular to the rotation axis and the first direction may be not less than 20 degrees and not more than 70 degrees. This configuration can even further suppress the loss of the information obtained by the sensor.

In the above rotating tool, the base member may be a board. This configuration facilitates the installation of the antenna (transmitting antenna), which is a chip antenna or a PCB antenna.

In the above rotating tool, the first sensor may be a strain sensor. This configuration makes it possible to obtain information on the strain, which is important for monitoring the state of the rotating tool.

In the above rotating tool, the first sensor, which is the strain sensor, may be arranged to detect a strain in a direction along the rotation axis. This configuration makes it possible to obtain information on the strain in the direction along the rotation axis, which is important for monitoring the state of the rotating tool.

In the above rotating tool, the sensor unit may further include a housing that houses the sensor module. The housing may include a tubular side wall portion surrounding the shaft portion and extending in a direction along the rotation axis, a bottom wall portion closing a first opening of the side wall portion in the direction along the rotation axis, and an upper wall portion closing a second opening of the side wall portion located on an opposite side from the first opening in the direction along the rotation axis. At least one of the bottom wall portion and the upper wall portion may be at least partially made of a resin.

Forming a part of the housing with a resin facilitates the transmission of signals from the antenna to the outside. In the housing, the presence of a portion formed of a resin in at least one of the bottom and upper wall portions, which have little effect on rigidity, can suppress the reduction in rigidity of the housing.

A rotating tool system of the present disclosure includes: the rotating tool of the present disclosure described above; and a receiver including a linear antenna that receives the signal containing the information on the first physical quantity transmitted from the antenna (transmitting antenna) described above.

The rotating tool system of the present disclosure, by including the rotating tool of the present disclosure, facilitates the reception of signals containing information obtained by a sensor in the receiver, while suppressing the loss of the information.

A sensor device in a first aspect of the present disclosure is a sensor device capable of configuring a sensor unit of a rotating tool, the rotating tool including a shaft portion extending from a first end to a second end along a rotation axis, the sensor unit disposed on the shaft portion, and a cutting edge disposed around the rotation axis of the shaft portion. The sensor device includes a sensor module, the sensor module including a first sensor that detects a first physical quantity of the shaft portion, a base member, and an antenna that is mounted on a first surface of the base member and externally transmits a signal containing information on the first physical quantity detected by the first sensor. The antenna is a chip antenna or a PCB antenna. In a cross section including the rotation axis, a first direction as a direction perpendicular to the first surface is inclined with respect to a plane perpendicular to the rotation axis and with respect to the rotation axis.

A sensor device in a second aspect of the present disclosure is a sensor device that includes a shaft region extending along a rotation axis, a sensor unit disposed on the shaft region, and a connecting portion formed at an end of the shaft region in a direction along the rotation axis and allowing a machining unit having a cutting edge to be connected thereto. The sensor unit includes a sensor module, the sensor module including a first sensor that detects a first physical quantity of the shaft region, a base member, and an antenna that is mounted on a first surface of the base member and externally transmits a signal containing information on the first physical quantity detected by the first sensor. The antenna is a chip antenna or a PCB antenna. In a cross section including the rotation axis, a first direction as a direction perpendicular to the first surface is inclined with respect to a plane perpendicular to the rotation axis and with respect to the rotation axis.

In the sensor devices of the present disclosure, the first direction, which is the direction perpendicular to the first surface of the base member on which the transmitting antenna is mounted, is inclined with respect to both the plane perpendicular to the rotation axis and the rotation axis. This can avoid the occurrence of a moment at which the electric field intensity of a polarized radio wave in a direction easier for the receiving antenna to receive becomes extremely weak. As a result, it becomes easier for an externally installed receiver to receive signals containing information obtained by a sensor, while suppressing the loss of the information.

### [Details of Embodiments of Present Invention]

Embodiments of the rotating tool according to the present disclosure will be described below with reference to the drawings. In the drawings referenced below, the same or corresponding portions are denoted by the same reference numerals and the description thereof will not be repeated.

### (Embodiment 1)

### (Overview of Structure of Rotating Tool)

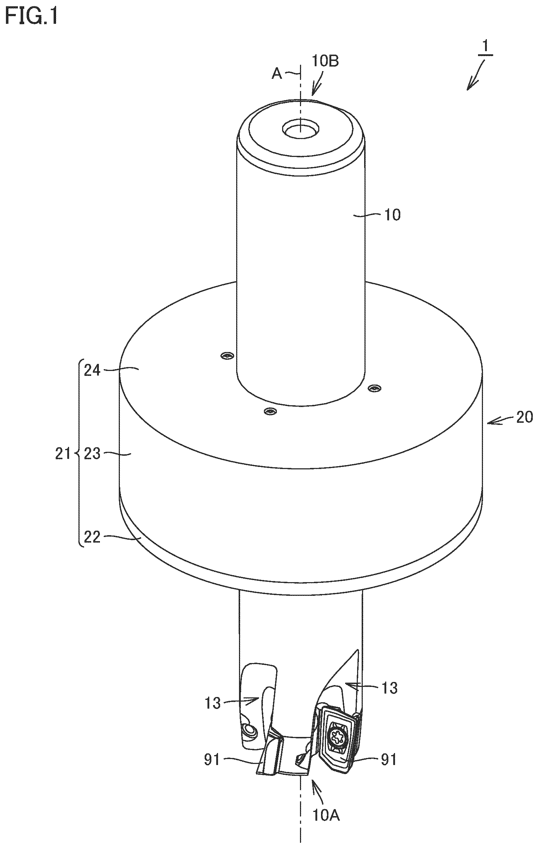

FIG. 1 is a schematic perspective view showing the structure of a rotating tool. An overview of the structure of the rotating tool will first be described with reference to FIG. 1. The rotating tool 1 of the present embodiment includes a shaft portion 10 and a sensor unit 20. The shaft portion 10 extends from a first end 10A to a second end 10B along a rotation axis A. The sensor unit 20 is disposed to surround a portion in a longitudinal direction of the shaft portion 10. The shaft portion 10 has a plurality of (here, four) recesses 13 formed at equal intervals in a circumferential direction, which are open at the first end 10A and at an outer peripheral surface thereof. Wall surfaces defining the recesses 13 have cutting inserts 91 as cutting edges attached thereto. The cutting inserts 91 are disposed around the rotation axis A of the shaft portion 10. As the rotating tool 1 is rotated around the rotation axis A, the cutting inserts 91 can be brought into contact with a workpiece (not shown) to thereby machine the workpiece. In other words, the rotating tool 1 is a rotating tool that cuts a workpiece by rotating around the rotation axis A of the shaft portion 10.

### (Structure of Shaft Portion)

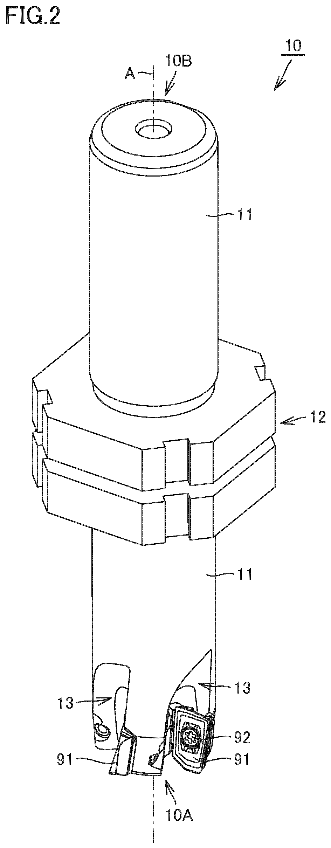

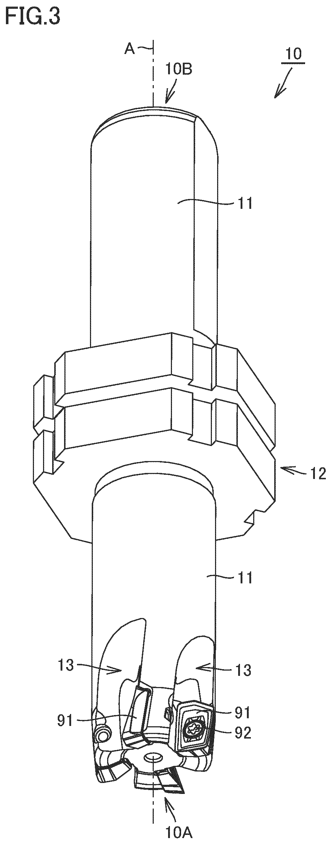

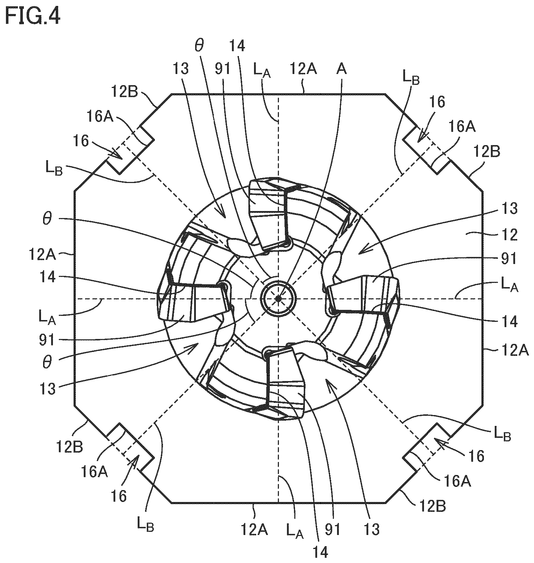

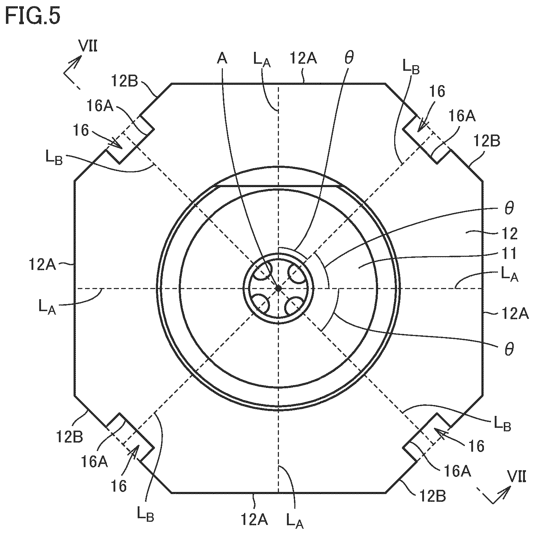

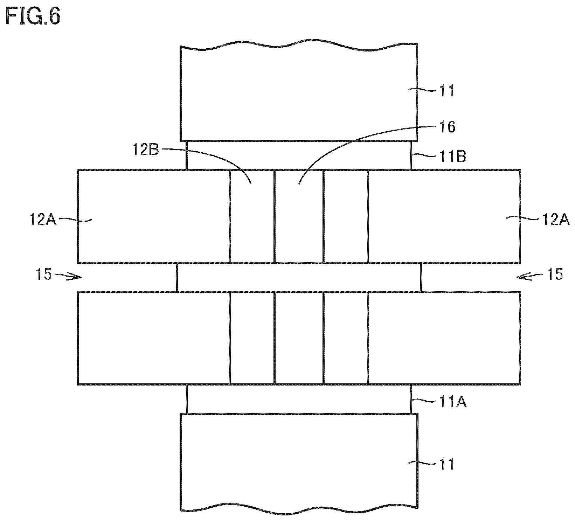

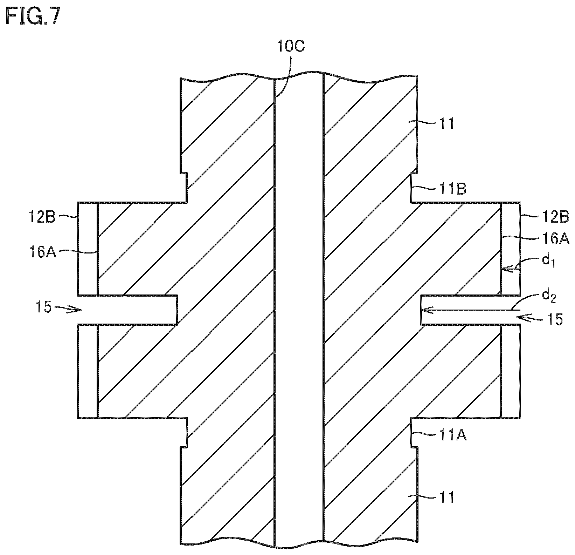

Each component of the rotating tool will now be described in detail. FIG. 2 is a schematic perspective view showing the structure of the shaft portion as viewed from the second end 10B side. FIG. 3 is a schematic perspective view showing the structure of the shaft portion as viewed from the first end 10A side. FIG. 4 is a schematic plan view showing the structure of the shaft portion as viewed from the first end side in the rotation axis direction. FIG. 5 is a schematic plan view showing the structure of the shaft portion as viewed from the second end side in the rotation axis direction. FIG. 6 is a schematic plan view showing the structure of the shaft portion as viewed in a direction perpendicular to the axis direction. FIG. 7 is a schematic cross-sectional view showing a cross section along the line VII-VII in FIG. 5. The structure of the shaft portion 10 will be described with reference to FIGS. 2 to 7.

Referring to FIGS. 2 and 3, the shaft portion 10 includes a body portion 11, and an increased-diameter portion 12 as a first region. The body portion 11 has a cylindrical shape. The rotation axis A coincides with a central axis of the body portion 11. The increased-diameter portion 12 is a portion having a larger diameter than the body portion 11. Although the position of the increased-diameter portion 12 in the longitudinal direction of the body portion 11 is not particularly limited, in the present embodiment, the increased-diameter portion 12 is located at a longitudinally central portion of the body portion 11. The increased-diameter portion 12 is located at a region of the shaft portion 10 surrounded by the sensor unit 20.

Referring to FIGS. 2 to 4, the cutting inserts 91 are attached to the wall surfaces defining the recesses 13 of the shaft portion 10, as previously described. The cutting inserts 91 are fixed to the shaft portion 10 with screws 92 which are inserted and tightened into screw holes formed in the cutting inserts 91.

Referring to FIGS. 2 to 6, the increased-diameter portion 12 has an octagonal prism shape. Referring to FIGS. 4 and 5, the increased-diameter portion 12 has an octagonal shape as viewed in a direction along the rotation axis A. More specifically, in a cross section perpendicular to the rotation axis A, the increased-diameter portion 12 has an octagonal shape obtained by removing four isosceles right triangles of the same shape from each of the four corners of a square. The rotation axis A passes through the center of gravity of this octagon. The octagonal shape is consistent in the direction along the rotation axis A. The central axis of the body portion 11 coincides with the central axis of the increased-diameter portion 12. Here, the central axis of the increased-diameter portion 12 means a straight line passing through the center of gravity of the octagon.

Referring to FIGS. 4 and 5, as viewed in the direction along the rotation axis A, the octagon is configured with alternately arranged outer peripheral surfaces 12A, corresponding to long sides, and outer peripheral surfaces 12B, corresponding to short sides shorter than the long sides. Among perpendicular lines L_{A} and L_{B} passing through the rotation axis A of the outer peripheral surfaces 12A and 12B of the increased-diameter portion 12, angles θ formed by respective pairs of the perpendicular lines L_{A} and L_{B} of the outer peripheral surfaces 12A and 12B corresponding to the circumferentially adjacent sides of the octagon are equal to each other. Specifically, the angle θ is 45 degrees. It should be noted that the octagonal shape is not limited to the above-described shape; the outer peripheral surfaces 12A and the outer peripheral surfaces 12B may have the same length as viewed in the direction along the rotation axis A.

Referring to FIGS. 2 to 6, each outer peripheral surface 12B has a first recess 16 formed to extend in a direction along the rotation axis A. A bottom surface 16A defining the first recess 16 is planar. The first recess 16 is arranged at a position intersecting the perpendicular line L_{B}. The first recess 16 extends through the outer peripheral surface 12B in the direction along the rotation axis A. The outer peripheral surfaces 12A and 12B of the increased-diameter portion 12 have a second recess 15 formed to extend in the circumferential direction of the increased-diameter portion 12. The second recess 15 is formed to overlap the first recess 16. The second recess 15 intersects the first recess 16 (orthogonally). The second recess 15 is formed around the entire circumference of the outer peripheral surfaces 12A and 12B of the increased-diameter portion 12. That is, the second recess 15 is formed in a ring shape.

Referring to FIGS. 6 and 7, the second recess 15 has a depth d₂ which is greater than a depth d₁ of the first recess 16. At a boundary between the increased-diameter portion 12 and the first end 10A side of the body portion 11, a first small-diameter portion 11A having a smaller diameter than other portions is formed. At a boundary between the increased-diameter portion 12 and the second end 10B side of the body portion 11, a second small-diameter portion 11B having a smaller diameter than other portions is formed. The shaft portion 10 has a through hole 10C formed to penetrate through the shaft portion 10 in the direction along the rotation axis A. The through hole 10C extends to include the rotation axis A.

### (Structure of Sensor Unit)

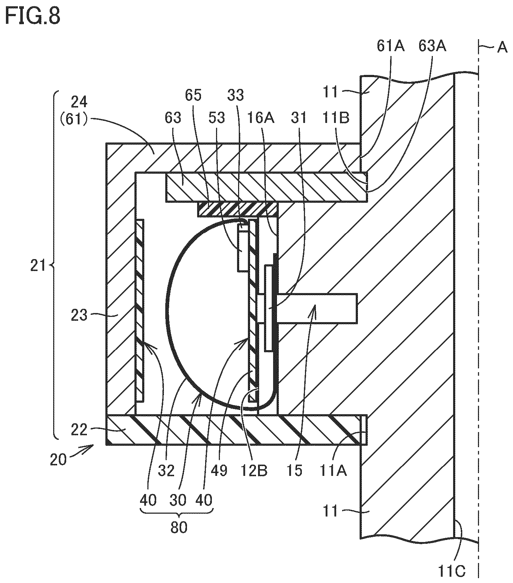

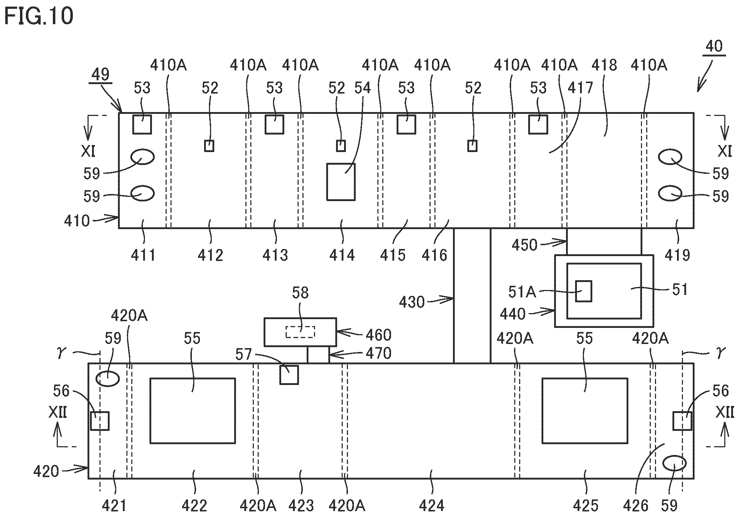

The structure of the sensor unit 20 will now be described with reference to FIGS. 8 to 19. The sensor unit 20 corresponds to one embodiment of the sensor device of the present disclosure. Referring to FIGS. 8 and 10, the sensor unit 20 includes a sensor module 80, and a housing 21 that houses the sensor module 80. The sensor module 80 includes a plurality of strain sensors 31 as a plurality of first sensors, a board 49 electrically connected to the strain sensors 31, and a wireless communication unit 51 (see FIG. 10) electrically connected to the board 49. The strain sensors 31 detect a strain as a first physical quantity of the shaft portion 10. The wireless communication unit 51 includes an antenna 51A. The antenna 51A of the wireless communication unit 51 externally transmits signals containing information on the strain detected by the strain sensors 31.

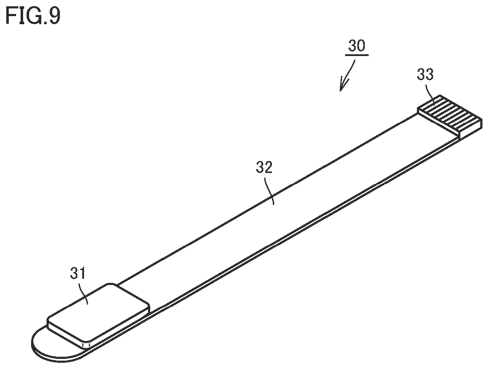

Referring to FIG. 9, a strain sensor 31 constitutes a strain sensor component 30. The strain sensor component 30 includes the strain sensor 31, and a wire 32 connected to the strain sensor 31 and having a connector 33 at its distal end. The wire 32 has a strip shape. The strain sensor 31 is disposed near one end of the wire 32. The connector 33 is disposed at the other end of the wire 32.

Referring to FIGS. 10 to 12, the board 49 constitutes a board module 40. The board 49 includes a board body made of an insulator, such as a resin, and a circuit pattern (not shown) made of a conductor, such as copper, formed on a surface of the board body.

Referring to FIG. 10, the board module 40 includes the board 49, the wireless communication unit 51, an acceleration sensor 52 as a second sensor, a socket 53, an AD converter 54, a power supply circuit 55, a battery socket 56, a charging connector 57, and a power switch 58. The wireless communication unit 51, the acceleration sensor 52, the socket 53, the AD converter 54, the power supply circuit 55, the battery socket 56, the charging connector 57, and the power switch 58 are disposed on the board 49 and electrically connected to the board 49 (to the circuit pattern on the board 49). The acceleration sensor 52 detects an acceleration as a second physical quantity of the shaft portion 10. A plurality of such acceleration sensors 52 are disposed on the board 49. The wireless communication unit 51 is electrically connected to the acceleration sensors 52 through the board 49. The antenna 51A of the wireless communication unit 51 externally transmits signals containing information on the acceleration of the shaft portion 10 detected by the acceleration sensors 52.

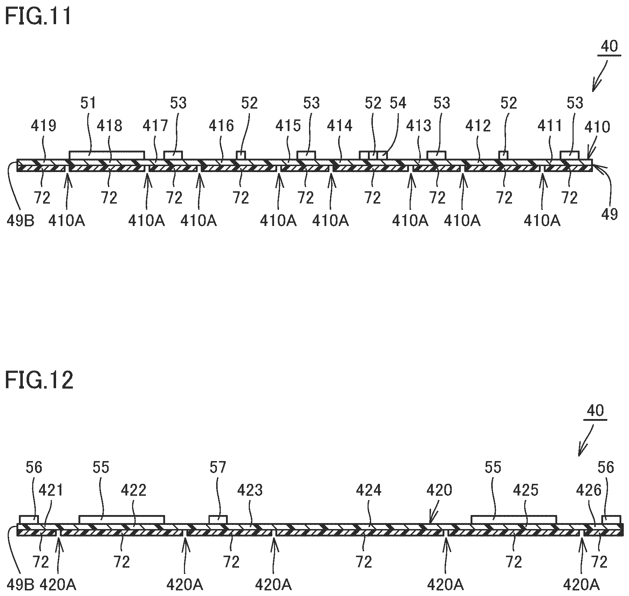

The board 49 includes a first portion 410, a second portion 420, a first connecting portion 430, a third portion 440, a second connecting portion 450, a fourth portion 460, and a third connecting portion 470. The first portion 410 and the second portion 420 each have a strip shape. Referring to FIGS. 10 and 11, the first portion 410 includes a first portion first zone 411, a first portion second zone 412, a first portion third zone 413, a first portion fourth zone 414, a first portion fifth zone 415, a first portion sixth zone 416, a first portion seventh zone 417, a first portion eighth zone 418, and a first portion ninth zone 419, which are arranged in this order. A bendable portion 410A is disposed between each pair of adjacent zones.

Referring to FIG. 11, the first portion 410 includes a body portion 49B which is a board having flexibility (a flexible board), and a reinforcing plate 72 which is disposed on a main surface of the body portion 49B (opposite to the main surface on which the circuit pattern is formed) and has a Young's modulus larger than that of the body portion 49B. The reinforcing plate 72 is disposed in each of regions corresponding to the first portion first zone 411, the first portion second zone 412, the first portion third zone 413, the first portion fourth zone 414, the first portion fifth zone 415, the first portion sixth zone 416, the first portion seventh zone 417, the first portion eighth zone 418, and the first portion ninth zone 419. The reinforcing plate 72 is not disposed in regions corresponding to the bendable portions 410A. As a result, the bendable portions 410A are bendable.

Referring to FIGS. 10 and 11, the first portion first zone 411 and the first portion ninth zone 419 each have at least one through hole 59 (here, a plurality of, specifically two through holes) formed to penetrate through the first portion 410 in a thickness direction thereof. The two through holes 59 are arranged side by side in a direction intersecting (orthogonal to) the longitudinal direction of the first portion 410, i.e., in the width direction of the first portion 410. The socket 53 is disposed on each of the first portion first zone 411, the first portion third zone 413, the first portion fifth zone 415, and the first portion seventh zone 417. Each socket 53 is disposed at an end in the width direction of the first portion 410. The acceleration sensor 52 is disposed on each of the first portion second zone 412, the first portion fourth zone 414, and the first portion sixth zone 416. The AD converter 54 is disposed on the first portion fourth zone 414. On the first portion fourth zone 414, the acceleration sensor 52 and the AD converter 54 are arranged side by side in the width direction of the first portion 410.

Referring to FIGS. 10 and 12, the second portion 420 includes a second portion first zone 421, a second portion second zone 422, a second portion third zone 423, a second portion fourth zone 424, a second portion fifth zone 425, and a second portion sixth zone 426, which are arranged in this order. A bendable portion 420A is disposed between each pair of adjacent zones.

Referring to FIG. 12, the second portion 420 includes a body portion 49B which is a flexible board, and a reinforcing plate 72 which is disposed on a main surface of the body portion 49B (opposite to the main surface on which the circuit pattern is formed) and has a Young's modulus larger than that of the body portion 49B. The reinforcing plate 72 is disposed in each of regions corresponding to the second portion first zone 421, the second portion second zone 422, the second portion third zone 423, the second portion fourth zone 424, the second portion fifth zone 425, and the second portion sixth zone 426. The reinforcing plate 72 is not disposed in regions corresponding to the bendable portions 420A. As a result, the bendable portions 420A are bendable.

Referring to FIGS. 10 and 12, the second portion first zone 421 and the second portion sixth zone 426 each have a through hole 59 formed to penetrate through the second portion 420 in a thickness direction thereof. The battery socket 56 is disposed on each of the second portion first zone 421 and the second portion sixth zone 426. Each battery socket 56 is disposed at the central portion in the width direction of the second portion 420. A connecting direction of the battery socket 56 (connecting direction γ for a connector to be connected to the battery socket 56) is a direction along the width direction of the second portion 420. When the board module 40 is housed in the housing 21, as will be described later, the connecting direction γ of the battery socket 56 becomes the direction along the rotation axis A. The power supply circuit 55 is disposed on each of the second portion second zone 422 and the second portion fifth zone 425. The charging connector 57 is disposed on the second portion third zone 423.

The first portion sixth zone 416 and the second portion fourth zone 424 are physically and electrically connected by the first connecting portion 430 having a strip shape. The first connecting portion 430, the body portion 49B of the first portion 410, and the body portion 49B of the second portion 420 are composed of a single flexible board. That is, the first portion 410, the second portion 420, and the first connecting portion 430 include a single flexible board that extends over the entirety of the first portion 410, the second portion 420, and the first connecting portion 430. The first portion eighth zone 418 and the third portion 440 are physically and electrically connected by the second connecting portion 450. The wireless communication unit 51 including the antenna 51A is disposed on the third portion 440. The second portion third zone 423 and the fourth portion 460 are physically and electrically connected by the third connecting portion 470. The power switch 58 is disposed on the fourth portion 460. The board 49 is configured such that the portions of the single flexible board requiring rigidity have the reinforcing plate attached thereto, and the portions not having the reinforcing plate attached thereto are bendable.

Referring to FIGS. 10 and 5, the first portion first zone 411, the first portion third zone 413, the first portion fifth zone 415, the first portion seventh zone 417, and the first portion ninth zone 419 each have a length in the longitudinal direction of the first portion 410 corresponding to the length of an outer peripheral surface 12B which is the short side of the above-described octagon when the increased-diameter portion 12 is viewed in the direction along the rotation axis A. The first portion second zone 412, the first portion fourth zone 414, the first portion sixth zone 416, and the first portion eighth zone 418 each have a length in the longitudinal direction of the first portion 410 corresponding to the length of an outer peripheral surface 12A which is the long side of the octagon when the increased-diameter portion 12 is viewed in the direction along the rotation axis A.

The installation of the strain sensor components 30 and the board module 40 with respect to the shaft portion 10 will now be described. A strain sensor component 30 is arranged such that the strain sensor 31 straddles the second recess 15 and the strain sensor 31 is housed in the first recess 16 (see, for example, FIGS. 2, 4, and 8). In other words, the strain sensor 31 is arranged so as to detect the strain in the direction along the rotation axis A. The strain sensor component 30 is installed on each of the four outer peripheral surfaces 12B. As a result, as viewed in the direction along the rotation axis A, among the outer peripheral surfaces of the increased-diameter portion 12 corresponding to the respective sides of the octagon, the strain sensors 31 are disposed on all of the outer peripheral surfaces 12B (outer peripheral surfaces corresponding to the short sides) of the increased-diameter portion 12 whose perpendicular lines L_{B} passing through the rotation axis A form 90 degrees to each other.

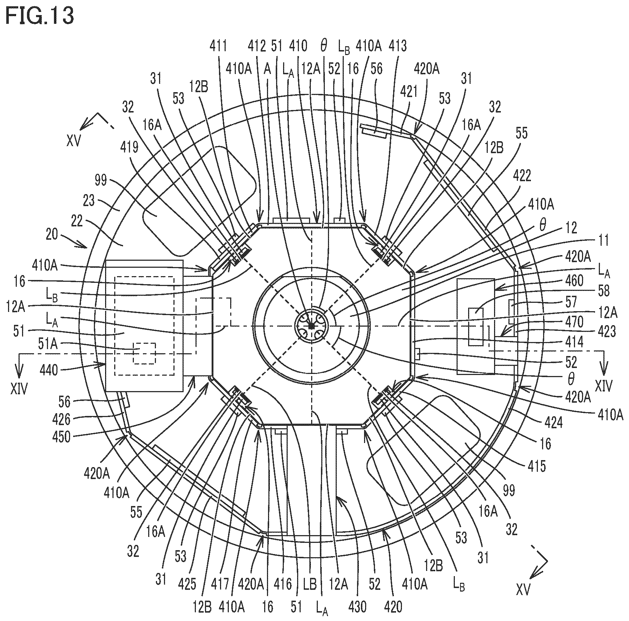

Referring to FIGS. 13 to 15, the first portion 410 of the board 49 includes a first main surface 410B, and a second main surface 410C located on the opposite side from the first main surface 410B in the thickness direction. The first portion 410 is arranged such that the first main surface 410B faces an outer peripheral surface of the shaft portion 10. The wireless communication unit 51, the acceleration sensors 52, the sockets 53, and the AD converter 54 are mounted on the second main surface 410C. The first portion 410 is wound around the increased-diameter portion 12 such that the first main surface 410B comes into contact with the outer peripheral surfaces 12A and 12B of the increased-diameter portion 12. At this time, the first portion first zone 411, the first portion third zone 413, the first portion fifth zone 415, the first portion seventh zone 417, and the first portion ninth zone 419 are disposed on the outer peripheral surfaces 12B, and the first portion second zone 412, the first portion fourth zone 414, the first portion sixth zone 416, and the first portion eighth zone 418 are disposed on the outer peripheral surfaces 12A. The first portion 410 bends at the bendable portions 410A. The first portion first zone 411 and the first portion ninth zone 419 overlap each other such that the through holes 59 formed therein are aligned. Fixing members (not shown) are installed to pass through the through holes 59, thereby fixing the first portion 410 to the shaft portion 10.

As a result, as viewed in the direction along the rotation axis A, the first portion 410 is arranged to follow the outer peripheral surfaces 12A and 12B of the increased-diameter portion 12. Each socket 53 is disposed on the first portion 410 located on the outer peripheral surface 12B. A connector 33, located at one end of the wire 32 connected to the strain sensor 31, is connected to the socket 53. This electrically connects the first portion 410 and the strain sensor 31. As shown in FIG. 8, the wire 32 straddles the first portion 410 in the width direction (direction along the rotation axis A). The wire 32 is bent into an arcuate shape. That is, the wire 32 connects the strain sensor 31 and the socket 53 with slack. As viewed in the direction along the rotation axis A, among the outer peripheral surfaces of the increased-diameter portion 12 corresponding to the respective sides of the octagon, the acceleration sensors 52 are disposed on the outer peripheral surfaces 12A (outer peripheral surfaces corresponding to the long sides) of the increased-diameter portion 12 whose perpendicular lines L_{A} passing through the rotation axis A form 90 degrees to each other. The strain sensors 31 and the acceleration sensors 52 are disposed on the outer peripheral surfaces 12A and 12B of the increased-diameter portion 12 corresponding to the different sides of the octagon.

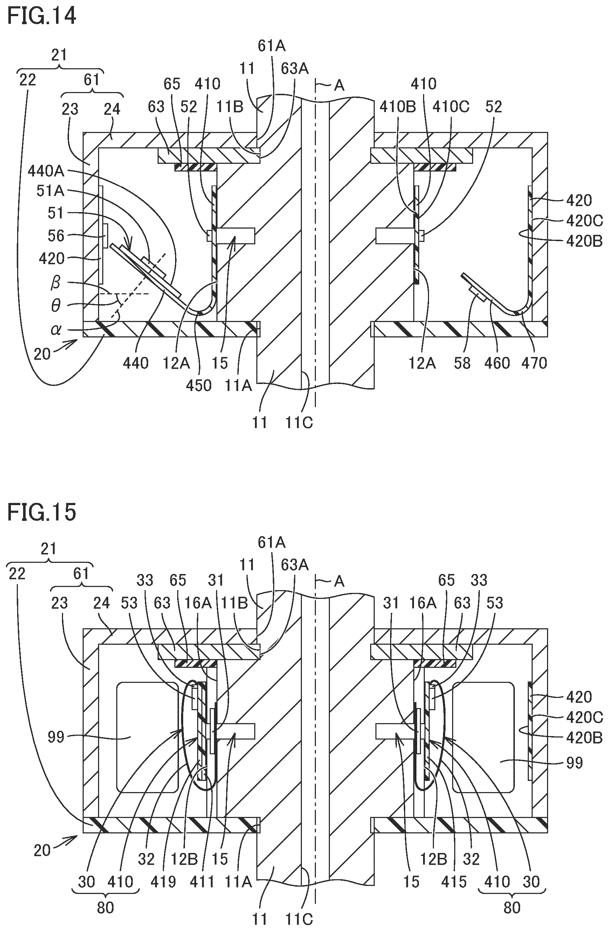

Referring to FIGS. 14 and 15, the second portion 420 of the board 49 includes a third main surface 420B, and a fourth main surface 420C located on the opposite side from the third main surface 420B in the thickness direction. The second portion 420 is arranged on an outer periphery side of the first portion 410 in the radial direction of the shaft portion 10 such that the third main surface 420B faces the shaft portion 10 side. The first connecting portion 430, which electrically connects the first portion 410 and the second portion 420, is disposed between the first portion 410 and the second portion 420 in the radial direction of the shaft portion 10.

The housing 21 includes a tubular side wall portion 23 surrounding the shaft portion 10 and extending in the direction along the rotation axis A, a bottom wall portion 22 closing a first opening of the side wall portion 23 in the direction along the rotation axis A, and an upper wall portion 24 closing a second opening of the side wall portion located on the opposite side from the first opening in the direction along the rotation axis A. The bottom wall portion 22 is made of a resin. The first portion 410 is arranged to extend in a circumferential direction of the shaft portion 10 along the outer peripheral surface of the shaft portion 10. The second portion 420 is arranged to extend in a circumferential direction of the side wall portion 23 along an inner peripheral surface of the side wall portion 23. The second portion 420 bends at the bendable portions 420A. The power supply circuits 55, the battery sockets 56, the charging connector 57, and the like are disposed on the third main surface 420B of the second portion 420. At this time, the connecting direction γ of each battery socket 56 is the direction along the rotation axis A.

Referring to FIGS. 13 and 15, the sensor module 80 includes a battery 99. In the present embodiment, the sensor module 80 includes a plurality of (specifically, two) batteries 99. The batteries 99 are disposed between the first portion 410 and the second portion 420 in the radial direction of the shaft portion 10. The plurality of batteries 99 are disposed at equal intervals in the circumferential direction of the shaft portion 10. As viewed in the direction along the rotation axis A, the plurality of batteries 99 are disposed symmetrically with respect to the rotation axis A. The batteries 99 are rechargeable batteries, i.e., secondary batteries. The batteries 99 supply power, via the battery sockets 56 and the power supply circuits 55 disposed on the second portion 420, to the wireless communication unit 51, the acceleration sensors 52, the sockets 53, and the AD converter 54 on the first portion 410, which is connected to the second portion 420 by the first connecting portion 430. The batteries 99 are charged through the charging connector 57 disposed on the second portion 420. The batteries 99 may be primary batteries.

The third portion 440 as a base member on which the wireless communication unit 51 including the antenna 51A is mounted is disposed between the first portion 410 and the second portion 420 in the radial direction of the shaft portion 10. Here, the installation state of the wireless communication unit 51 including the antenna 51A is adjusted with the bending of the second connecting portion 450. Specifically, referring to FIG. 14, the wireless communication unit 51 including the antenna 51A is mounted on a mounting surface 440A as a first surface of the third portion 440. That is, in the present embodiment, the base member is the board. The base member of the present disclosure is not limited to the board; a support member of any shape having a first surface (mounting surface) on which the antenna 51A (the wireless communication unit 51 including the antenna 51A) is mounted can be adopted as the base member. The antenna 51A is a chip antenna or a PCB antenna. The antenna 51A is a transmitting antenna that externally transmits information on the strain as the first physical quantity detected by the strain sensors 31 as the first sensors, and information on the acceleration as the second physical quantity detected by the acceleration sensors 52 as the second sensors. In a cross section including the rotation axis A (cross section shown in FIG. 14), a first direction α, which is a direction perpendicular to the mounting surface 440A, is inclined with respect to a plane β perpendicular to the rotation axis A and with respect to the rotation axis A. The angle formed by the plane β perpendicular to the rotation axis A and the first direction α is preferably not less than 5 degrees and not more than 85 degrees, not less than 15 degrees and not more than 75 degrees, and further, not less than 20 degrees and not more than 70 degrees. The angle formed by the plane β perpendicular to the rotation axis A and the first direction α can be set to, for example, not less than 30 degrees and not more than 45 degrees.

The fourth portion 460, on which the power switch 58 is mounted, is disposed between the first portion 410 and the second portion 420 in the radial direction of the shaft portion 10. The installation state of the power switch 58 can be adjusted with the bending of the third connecting portion 470. The power switch 58 is capable of switching the state (ON or OFF) of the power supply from the batteries 99.

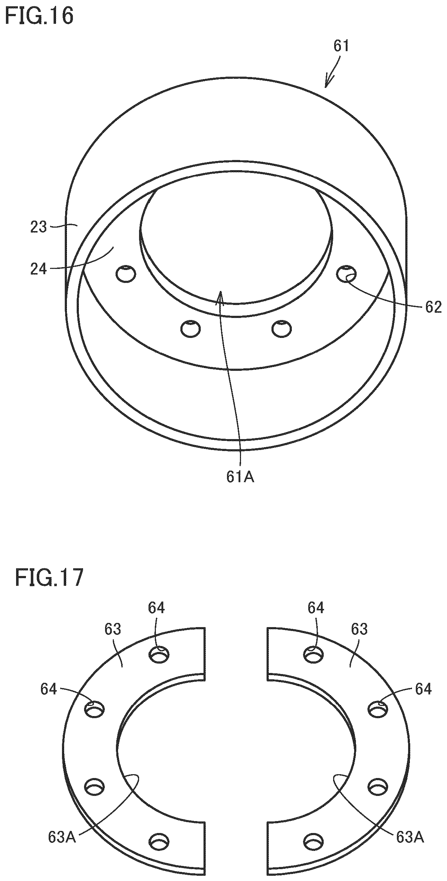

The installation of the housing 21 with respect to the shaft portion 10 will now be described. Referring to FIG. 8 and FIGS. 13 to 19, the housing 21 includes a housing main body 61, a first fixing member 63, a second fixing member 65, and a lid 22. The housing main body 61, as shown in FIG. 16, includes the disk-shaped upper wall portion 24 having a through hole 61A at the center, and the side wall portion 23 of a cylindrical shape rising from an outer peripheral surface of the upper wall portion 24. The upper wall portion 24 has a plurality of (here, eight) screw holes 62 formed at equal intervals in a circumferential direction to penetrate through the upper wall portion 24 in a thickness direction thereof. The material constituting the housing main body 61 is, for example, a metal. Examples of the metal that can be adopted include an aluminum alloy and an iron alloy (steel such as stainless steel).

Referring to FIG. 17, the first fixing member 63 has an annular flat plate shape divided into two. The first fixing member 63 has a plurality of screw holes 64 (here, a total of eight screw holes in the first fixing member 63 divided into two) formed at equal intervals in a circumferential direction so as to correspond to the screw holes 62 in the upper wall portion 24 of the housing main body 61. The first fixing member 63 has an inner peripheral surface 63A having a shape corresponding to the second small-diameter portion 11B of the shaft portion 10. In the state in which the two halves of the first fixing member 63 are combined into a ring shape, the inner peripheral surface 63A has a diameter equal to or slightly larger than the diameter of the first small-diameter portion 11A. The material constituting the first fixing member 63 is, for example, a metal. Examples of the metal that can be adopted include an aluminum alloy and an iron alloy (steel such as stainless steel).

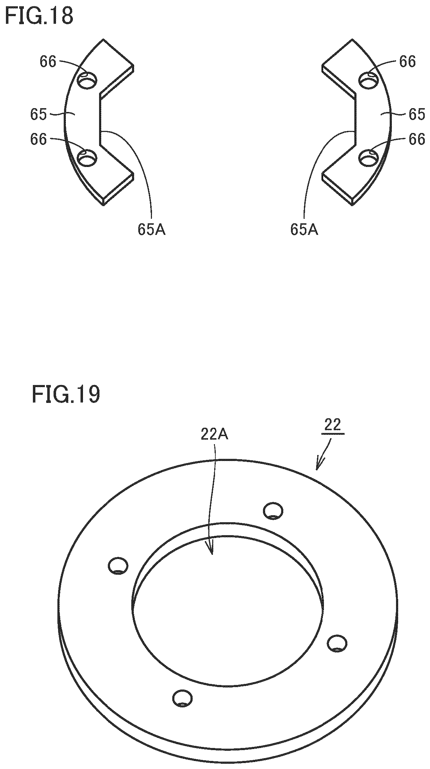

Referring to FIG. 18, the second fixing member 65 is a component having a flat circular arc shape. In the present embodiment, the housing 21 includes two second fixing members 65. Each second fixing member 65 has an inner peripheral surface 65A having a shape corresponding to a part of the flat surface shape of the outer peripheral surface of the increased-diameter portion 12, i.e., a shape corresponding to a part of the octagon. The second fixing members 65 have a plurality of screw holes 66 (here, two screw holes for each second fixing member 65) formed to correspond to the screw holes 62 in the upper wall portion 24 of the housing main body 61 and the screw holes 64 in the first fixing member 63. The material constituting the second fixing members 65 is, for example, a resin.

Referring to FIG. 19, the lid (bottom wall portion) 22 has a disk shape with a through hole 22A at the center. The material constituting the lid 22 is, for example, a resin.

Referring to FIG. 8, the housing main body 61 is arranged such that the body portion 11 of the shaft portion 10 passes through the through hole 61A in the upper wall portion 24 of the housing main body 61. The first fixing member 63, while being positioned in contact with the upper wall portion 24, is fitted into the second small-diameter portion 11B of the body portion 11 such that its inner peripheral surface 63A contacts the wall surface of the second small-diameter portion 11B. The second fixing members 65, while being positioned in contact with the first fixing member 63, are arranged such that their inner peripheral surfaces 65A contact the outer peripheral surfaces 12A and 12B of the increased-diameter portion 12.

The housing main body 61, the first fixing member 63, and the second fixing members 65 are then fixed to each other with screws which pass through the screw holes 64 in the second fixing members 65 and the screw holes 64 in the first fixing member 63 to reach the screw holes 62 in the upper wall portion 24. At this time, since the inside diameter of the first fixing member 63 corresponds to the outside diameter of the second small-diameter portion 11B, the central axis of the housing main body 61 coincides with the rotation axis A. Furthermore, since the inner peripheral surface 65A of each second fixing member 65 has a shape corresponding to a part of the flat surface shape of the outer peripheral surface of the increased-diameter portion 12 (shape corresponding to a part of the octagon), the housing main body 61 is prevented from rotating circumferentially relative to the shaft portion 10. The lid (bottom wall portion) 22 is fixed to the increased-diameter portion 12 by, for example, screws or the like in the state of being in contact with the end surface of the side wall portion 23 and the end surface of the increased-diameter portion 12. In this manner, the housing 21 is fixed to the shaft portion 10 in the state with the sensor module 80 housed therein.

### (Operation of Rotating Tool)

During operation of the rotating tool 1, the rotating tool 1 rotates around the rotation axis A. A workpiece is machined with the cutting inserts 91 coming into contact with the workpiece. At this time, the strain and the acceleration of the shaft portion 10 are detected by the strain sensors 31 and the acceleration sensors 52, respectively. The pieces of information on the strain and acceleration, which are analog signals, are converted to digital signals in the AD converter 54 and then transmitted to the outside by the antenna 51A in the wireless communication unit 51. The wireless communication unit 51 and the AD converter 54 operate with power supplied from the batteries 99 through the battery sockets 56 and the power supply circuits 55. Since the lid (bottom wall portion) 22 of the housing 21 is made of a resin, the wireless communication unit 51 can transmit signals to the outside through the lid (bottom wall portion) 22. The signals are received and analyzed by an externally installed receiver to monitor the state of the shaft portion 10.

### (Advantageous Effects of Present Embodiment)

In the rotating tool 1 of the present embodiment, the first direction α, which is the direction perpendicular to the mounting surface 440A of the third portion 440 on which the wireless communication unit 51 including the antenna 51A as a transmitting antenna is mounted, is inclined with respect to both the plane β perpendicular to the rotation axis A and the rotation axis A. This can avoid the occurrence of a moment at which the electric field intensity of a polarized radio wave in a direction easier for a receiving antenna to receive becomes extremely weak. As a result, the rotating tool 1 of the present embodiment is a rotating tool which makes it easy for an externally installed receiver to receive signals containing information obtained by strain sensors 31 and the like, while suppressing the loss of the information.

In the rotating tool 1 of the present embodiment, the bottom wall portion 22 made of a resin is adopted. This facilitates the transmission of signals from the antenna to the outside, while suppressing the reduction of the rigidity of the housing 21. It should be noted that the upper wall portion 24 may be made of a resin, or the bottom wall portion 22 and the upper wall portion 24 may be only partially made of a resin.

In the rotating tool 1 of the present embodiment, the battery sockets 56, which are components disposed on the second portion 420 arranged on the outer periphery side of the first portion 410, are disposed on the third main surface 420B, which is the main surface facing the shaft portion 10 side. As a result, falling of the battery sockets 56 due to the centrifugal force is suppressed. In addition, the power supply circuits and the charging connector 57, which are components disposed on the second portion 420, are also disposed on the third main surface 420B, thereby suppressing falling of these components due to the centrifugal force.

In the rotating tool 1 of the present embodiment, the batteries 99 are disposed between the first portion 410 and the second portion 420 in the radial direction of the shaft portion 10. By thus bringing the batteries having a large mass as close as possible to the rotation axis A, the centrifugal force acting on the batteries 99 is suppressed.

In the rotating tool 1 of the present embodiment, the first connecting portion 430 is a flexible board. Connecting the first portion 410 and the second portion 420 with the flexible board having flexibility in this manner facilitates proper installation of the first portion 410 and the second portion 420.

In the rotating tool 1 of the present embodiment, the first portion 410, the second portion 420, and the first connecting portion 430 include a single flexible board that extends over the entirety of the first portion 410, the second portion 420, and the first connecting portion 430. More specifically, the first connecting portion 430, the body portion 49B of the first portion 410, and the body portion 49B of the second portion 420 are composed of a single flexible board. Of the single flexible board, the portions requiring rigidity have the reinforcing plate 72 attached thereto, and the portions not having the reinforcing plate 72 attached thereto are bendable. As a result, a high degree of design freedom is ensured for the board module 40.

In the rotating tool 1 of the present embodiment, the connecting direction γ of each battery socket 56 is the direction along the rotation axis A. This suppresses falling of the connector from the battery socket 56 due to the centrifugal force resulting from the rotation of the rotating tool 1.

In the rotating tool 1 of the present embodiment, the first portion 410 is arranged to extend in the circumferential direction of the shaft portion 10 along the outer peripheral surface of the shaft portion 10. The second portion 420 is arranged to extend in the circumferential direction of the side wall portion 23 along the inner peripheral surface of the side wall portion 23. This facilitates the fixing of the first portion 410 and the second portion 420.

In the rotating tool 1 of the present embodiment, the wireless communication unit 51 including the antenna 51A is disposed in the third portion 440, which is electrically connected to the first portion 410 by the second connecting portion 450. This ensures a high degree of freedom in the installation of the wireless communication unit 51 including the antenna 51A.

In the rotating tool 1 of the present embodiment, the third portion 440 is disposed between the first portion 410 and the second portion 420 in the radial direction of the shaft portion 10. This ensures a higher degree of freedom in the installation of the wireless communication unit 51 including the antenna 51A.

In the rotating tool 1 of the present embodiment, the power switch 58 is disposed in the fourth portion 460, which is electrically connected to the second portion 420 by the third connecting portion 470. This ensures a high degree of freedom in the installation of the power switch 58.

In the rotating tool 1 of the present embodiment, the fourth portion 460 is disposed between the first portion 410 and the second portion 420 in the radial direction of the shaft portion 10. This ensures a higher degree of freedom in the installation of the power switch 58.

In the rotating tool 1 of the present embodiment, a plurality of batteries 99 are disposed at equal intervals in the circumferential direction of the shaft portion 10. Arranging the batteries 99 having a large mass in this manner can achieve stable rotation of the rotating tool 1.

In the rotating tool 1 of the present embodiment, as viewed in the direction of the rotation axis A, a plurality of batteries 99 are disposed symmetrically with respect to the rotation axis A. Arranging the batteries 99 having a large mass in this manner can achieve stable rotation of the rotating tool 1.

In the rotating tool 1 of the present embodiment, the AD converter 54 is disposed on the second main surface 410C. By thus arranging the AD converter 54 having a relatively large mass on the second main surface 410C near the rotation axis A, falling of the AD converter 54 due to the centrifugal force can be suppressed.

### (Modifications)

In the above embodiment, the case of adopting two types of sensors, a strain sensor 31 and an acceleration sensor 52, as a first sensor and a second sensor, respectively, has been described. However, for example, the acceleration sensor 52 as the second sensor may be omitted. Alternatively, only the acceleration sensor 52 can be adopted, with the strain sensor 31 being omitted. That is, the first sensor may be the acceleration sensor. Still alternatively, a sensor that detects a physical quantity other than the strain and acceleration (for example, a temperature sensor) may be adopted in addition to, or in place of one or both of, the strain sensor 31 and the acceleration sensor 52.

While the end mill has been described in the above embodiment as an example of the rotating tool of the present disclosure, the rotating tool of the present disclosure is not limited thereto. The rotating tool of the present disclosure may be, for example, a drill, a milling cutter, a boring tool, a reamer, a tap, or the like.

In the above embodiment, the case has been described in which the increased-diameter portion 12, disposed on a region of the shaft portion 10 surrounded by the sensor unit 20, has an octagonal shape as viewed in the direction along the rotation axis A. However, the increased-diameter portion only needs to have the planar shape of a 4n-gon (n is a natural number of 2 or more), which may be, for example, a dodecagon, a hexadecagon, or an icosagon.

In the above embodiment, the case has been described in which, among the outer peripheral surfaces 12A and 12B of the increased-diameter portion 12 corresponding to the respective sides of the octagon, the strain sensors 31 are disposed on all of the (four) outer peripheral surfaces 12B of the increased-diameter portion 12 whose perpendicular lines passing through the rotation axis A form 90 degrees to each other. However, the strain sensors only need to be disposed on at least two surfaces. As stated in a more generalized manner, when, among the outer peripheral surfaces of a first region (increased-diameter portion) corresponding to the respective sides of a 4n-gon, a total of two outer peripheral surfaces, i.e., a first outer peripheral surface and a second outer peripheral surface whose perpendicular line passing through the rotation axis forms 90 degrees to that of the first outer peripheral surface, or a total of three outer peripheral surfaces, i.e., the above two outer peripheral surfaces and a third outer peripheral surface whose perpendicular line passing through the rotation axis forms 180 degrees to that of the first outer peripheral surface, is considered as a set of outer peripheral surfaces, then the strain sensor is disposed on each of the outer peripheral surfaces in the set. By installing the strain sensors on the first and second outer peripheral surfaces whose perpendicular lines passing through the rotation axis form 90 degrees to each other, it is possible to obtain information on the magnitude and direction of a load acting in a plane perpendicular to the rotation axis. Furthermore, by installing the strain sensor also on the third outer peripheral surface, the effect of the load parallel to the rotation axis can be eliminated, making it possible to more accurately obtain the information on the magnitude and direction of the load acting in the plane perpendicular to the rotation axis. There may be a plurality of such sets of outer peripheral surfaces. For example, in the case where there are two such sets of outer peripheral surfaces, the strain sensor is disposed on each of the two or three outer peripheral surfaces included in each set of outer peripheral surfaces. That is, the strain sensors are disposed on a maximum of six outer peripheral surfaces. There are no restrictions on the angles between the two sets of outer peripheral surfaces.

In the above embodiment, the case in which the first fixing member 63 and the second fixing members 65 are separate has been described. However, the first fixing member 63 and the second fixing members 65 may be unitary. In this case, the first fixing member 63 and the second fixing members 65 may be a single member made of a metal.

In the above embodiment, the case in which the sensor unit 20 is attached to the shaft portion 10 using the first fixing member 63 and the second fixing members 65 has been described. However, the method of attaching the sensor unit 20 is not limited thereto. The sensor unit 20 may be attached to the shaft portion 10 using another method, such as shrink fitting.

### (Embodiment 2)

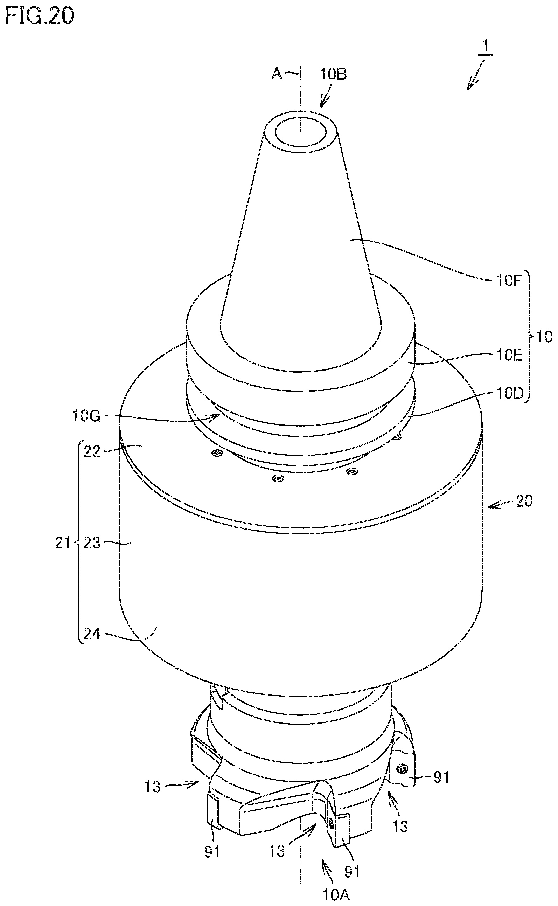

Another embodiment of the present disclosure, Embodiment 2, will now be described. FIG. 20 is a schematic perspective view showing the structure of a rotating tool of Embodiment 2. Referring to FIG. 20, the rotating tool 1 of the present embodiment basically has the same structure, operates in the same manner, and provides the same effects as the rotating tool 1 of Embodiment 1 described with reference to FIGS. 1 to 19. However, the rotating tool 1 of Embodiment 2 differs from that of Embodiment 1 mainly in the structure of the shaft portion 10.

Specifically, referring to FIG. 20, the shaft portion 10 of the present embodiment includes, in a region on the second end 10B side with respect to the sensor unit 20, a first protruding portion 10D and a second protruding portion 10E which have an annular shape and protrude in the radial direction (direction perpendicular to the rotation axis A). The second protruding portion 10E is arranged on the second end 10B side with respect to the first protruding portion 10D. A region between the first protruding portion 10D and the second protruding portion 10E of the shaft portion 10 in the direction along the rotation axis A is a groove portion 10G. A region on a side of the second protruding portion 10E opposite to the side of the first protruding portion 10D is a tapered portion 10F having a diameter that decreases as it approaches the second end. In other words, the shaft portion 10 of the present embodiment includes the tapered portion 10F having a truncated cone shape.

In the state of use of the rotating tool 1 of the present embodiment, the tapered portion 10F is inserted into a recess formed in a main spindle of a machine tool, so that the rotating tool 1 is held by the main spindle of the machine tool. The tapered portion 10F, the first protruding portion 10D, and the second protruding portion 10E have their shapes which can be suitably selected to match the chuck mechanism for a tool provided in the main spindle of the machine tool.

### (Embodiment 3)

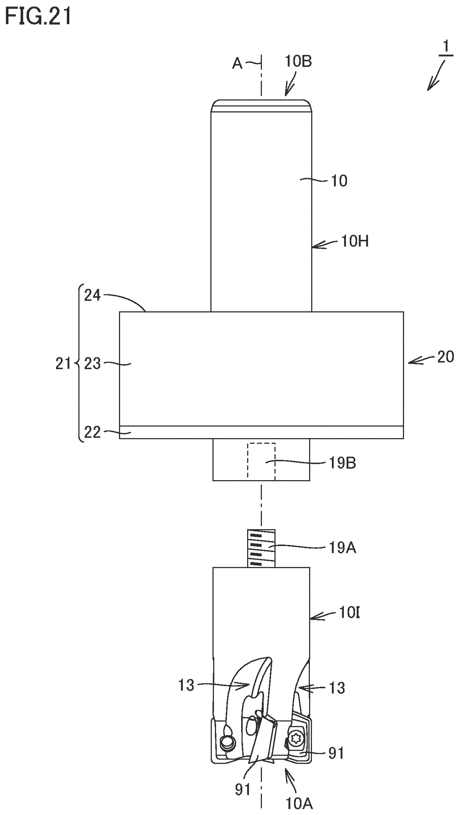

Yet another embodiment of the present disclosure, Embodiment 3, will now be described. FIG. 21 is a schematic perspective view showing the structure of a rotating tool of Embodiment 3. Referring to FIG. 21, the rotating tool 1 of the present embodiment basically has the same structure, operates in the same manner, and provides the same effects as the rotating tool 1 of Embodiment 1 described with reference to FIGS. 1 to 19. However, the rotating tool 1 of Embodiment 3 differs from that of Embodiment 1 in that a portion including the sensor unit 20 as the sensor device of the present disclosure and a portion including the first end 10A are separable.

Referring to FIG. 21, the shaft portion 10 of the rotating tool 1 of Embodiment 3 has a distal end region 10I as a machining unit including the first end 10A, which is separable at a portion closer to the first end 10A with respect to the region surrounded by the sensor unit 20. The portion of the shaft portion 10 other than the distal end region 10I is a proximal end region 10H as a shaft region of the sensor device.

The distal end region 10I has an external thread portion 19A formed at an end on the second end 10B side. The external thread portion 19A is a cylindrical projection that protrudes toward the second end 10B side along the rotation axis A. A helical thread is formed on an outer peripheral surface of the external thread portion 19A. The proximal end region 10H has an internal thread portion 19B as a connecting portion formed at an end on the first end 10A side. The internal thread portion 19B is a cylindrical recess that is recessed toward the second end 10B side along the rotation axis A. The internal thread portion 19B is a recess having a shape corresponding to that of the external thread portion 19A. A helical screw groove corresponding to the thread of the external thread portion 19A is formed on an inner peripheral surface defining the internal thread portion 19B.

The external thread portion 19A is screwed into the internal thread portion 19B to couple the external thread portion 19A with the internal thread portion 19B, so that the distal end region 10I and the proximal end region 10H are integrated. Thus, the rotating tool 1 similar to that of Embodiment 1 is obtained. The distal end region 10I and the proximal end region 10H can be separated by releasing the coupling between the external thread portion 19A and the internal thread portion 19B.

While the case in which the external thread portion 19A is formed in the distal end region 10I and the internal thread portion 19B is formed in the proximal end region 10H has been described in the above embodiment, the internal thread portion 19B may be formed in the distal end region 10I and the external thread portion 19A may be formed in the proximal end region 10H.

Furthermore, while in the above embodiment the case has been described in which the boundary between the distal end region 10I and the proximal end region 10H is located on the first end 10A side with respect to the sensor unit 20 in the direction along the rotation axis A, the boundary between the distal end region 10I and the proximal end region 10H may be located on the second end 10B side with respect to the sensor unit 20.

### (Embodiment 4)

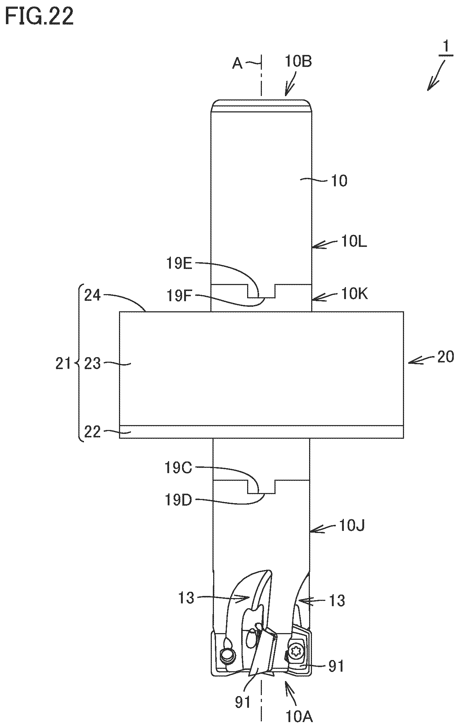

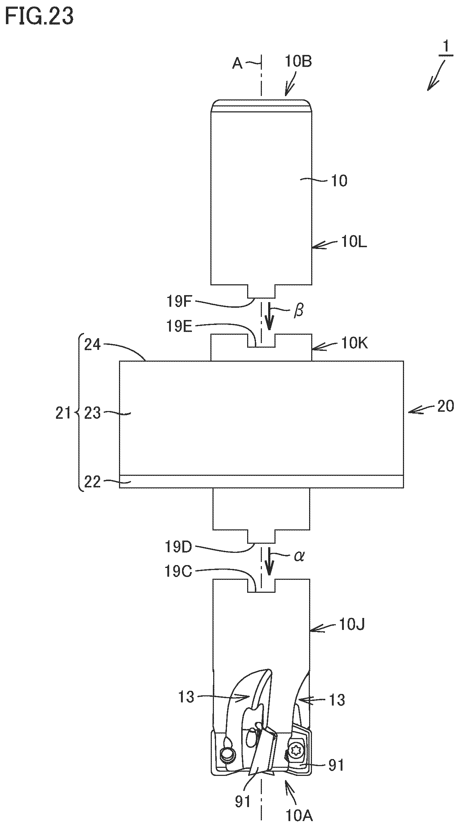

Yet another embodiment of the present disclosure, Embodiment 4, will now be described. FIG. 22 is a schematic perspective view showing the structure of a rotating tool of Embodiment 4. FIG. 23 is a schematic perspective view showing the rotating tool of Embodiment 4 in a disassembled state. Referring to FIGS. 22 and 23, the rotating tool 1 of the present embodiment basically has the same structure, operates in the same manner, and provides the same effects as the rotating tool 1 of Embodiment 1 described with reference to FIGS. 1 to 19. However, the rotating tool 1 of Embodiment 4 differs from that of Embodiment 1 in that a portion corresponding to the sensor device of the present disclosure including the sensor unit 20, a portion including the first end 10A, and a portion including the second end 10B are separable from each other.

Referring to FIGS. 22 and 23, the shaft portion 10 of the rotating tool 1 of Embodiment 4 has a distal end region 10J as a machining unit including the first end 10A and a proximal end region 10L including the second end 10B, both of which are separable from an intermediate region 10K as a shaft region of the sensor device including a region surrounded by the sensor unit 20.

The distal end region 10J has a recess 19C formed at an end on the second end 10B side. The recess 19C is a region that is recessed toward the first end 10A side in the direction along the rotation axis A. The intermediate region 10K has a protrusion 19D as a connecting portion formed at an end on the first end 10A side. The protrusion 19D is a region that protrudes toward the first end 10A side in the direction along the rotation axis A. The recess 19C is a recess having a shape corresponding to that of the protrusion 19D. The recess 19C and the protrusion 19D are configured to be engageable with each other.

The intermediate region 10K has a recess 19E formed at an end on the second end 10B side. The recess 19E is a region that is recessed toward the first end 10A side in the direction along the rotation axis A. The proximal end region 10L has a protrusion 19F formed at an end on the first end 10A side. The protrusion 19F is a region that protrudes toward the first end 10A side in the direction along the rotation axis A. The recess 19E is a recess having a shape corresponding to that of the protrusion 19F. The recess 19E and the protrusion 19F are configured to be engageable with each other.

The distal end region 10J and the intermediate region 10K are integrated by engaging the recess 19C with the protrusion 19D. Further, the intermediate region 10K and the proximal end region 10L are integrated by engaging the recess 19E with the protrusion 19F. Thus, the rotating tool 1 similar to that of Embodiment 1 is obtained. The distal end region 10J and the intermediate region 10K can be separated by releasing the engagement between the recess 19C and the protrusion 19D. The intermediate region 10K and the proximal end region 10L can be separated by releasing the engagement between the recess 19E and the protrusion 19F.

In the rotating tool of the present disclosure, the shaft portion may be an inseparable single member, as in Embodiment 1, or the shaft portion may be separable, as in Embodiments 3 and 4. The sensor device of the present disclosure may constitute a sensor unit that is separable from the shaft portion, as in Embodiment 1. Alternatively, the sensor device may be integral with a portion of the shaft portion, and that portion of the shaft portion may be connected to another portion of the shaft portion to constitute a unitary shaft portion, as in Embodiments 3 and 4.

### (Embodiment 5)

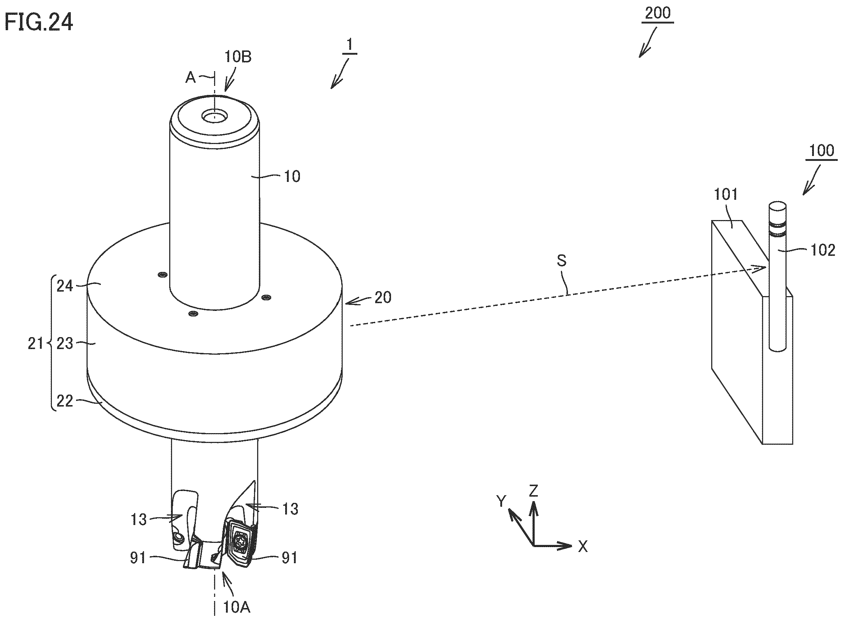

An example of a rotating tool system of the present disclosure, Embodiment 5, will now be described. FIG. 24 is a schematic diagram showing the configuration of a rotating tool system of Embodiment 5. FIG. 24 shows a state in which a rotating tool and a receiver included in the rotating tool system are installed in an operable state. In FIG. 24, the X-Y plane corresponds to the horizontal plane, and the Z direction corresponds to the vertical direction.

Referring to FIG. 24, the rotating tool system 200 of the present embodiment includes the rotating tool 1 of Embodiment 1 described above and a receiver 100. The receiver 100 includes a main body 101, and a linear antenna 102 installed in the main body 101. The linear antenna 102 is a receiving antenna that receives signals S containing information on the strain and acceleration transmitted from the antenna (transmitting antenna) of the rotating tool 1. The linear antenna 102 is, for example, a monopole antenna or a dipole antenna.

In the present embodiment, the rotating tool 1 is installed such that the rotation axis A is along the vertical direction, the Z axis direction, in consideration of ease of installation and operation, and the like. On the other hand, the receiver 100 is installed, for example, on a side wall surface of the room in which the rotating tool 1 is installed. At this time, the linear antenna 102 of the receiver 100 is installed along the vertical direction, the Z axis direction, from the viewpoint of, for example, avoiding interference with other installations. Here, as described above in Embodiment 1 with reference to FIG. 14, in the rotating tool 1 of the present embodiment, the first direction α, which is the direction perpendicular to the mounting surface 440A of the third portion 440 on which the wireless communication unit 51 including the antenna 51A as a transmitting antenna is mounted, is inclined with respect to both the plane β (X-Y plane) perpendicular to the rotation axis A and the rotation axis A (Z axis direction). That is, the first direction α is not parallel to any of the X axis, the Y axis, and the Z axis.

With the above, when the rotating tool 1 transmits a signal S while rotating around the rotation axis A, the occurrence of a moment at which the electric field intensity of a polarized radio wave in a direction easier for the linear antenna 102 as a receiving antenna to receive becomes extremely weak in the signal S can be avoided. As a result, the rotating tool system 200 of the present embodiment is a rotating tool system which makes it easy for an externally installed receiver 100 to receive signals S containing information obtained by strain sensors 31 and the like, while suppressing the loss of the information.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### Reference Signs List

1: rotating tool; 10: shaft portion; 10A: first end; 10B: second end; 10C: through hole; 10D: first protruding portion; 10E: second protruding portion; 10F: tapered portion; 10G: groove portion; 10H: proximal end region; 10I: distal end region; 10J: distal end region; 10K: intermediate region; 10L: proximal end region; 11: body portion; 11A: first small-diameter portion; 11B: second small-diameter portion; 12: increased-diameter portion; 12A: outer peripheral surface; 12B: outer peripheral surface; 13: recess; 15: second recess; 16: first recess; 16A: bottom surface; 19A: external thread portion; 19B: internal thread portion; 19C: recess; 19D: protrusion; 19E: recess; 19F: protrusion; 20: sensor unit; 21: housing; 22: bottom wall portion (lid); 22A: through hole; 23: side wall portion; 24: upper wall portion; 30: sensor component; 31: strain sensor; 32: wire; 33: connector; 40: board module; 49: board; 49B: body portion; 51: wireless communication unit; 51A: antenna; 52: acceleration sensor; 53: socket; 54: AD converter; 55: power supply circuit; 56: battery socket; 57: charging connector; 58: power switch; 59: through hole; 61: housing main body; 61A: through hole; 62: screw hole; 63: first fixing member; 63A: inner peripheral surface; 64: screw hole; 65: second fixing member; 65A: inner peripheral surface; 66: screw hole; 72: reinforcing plate; 80: sensor module; 91: cutting insert; 92: screw; 99: battery; 100: receiver; 101: main body; 102: linear antenna; 200: rotating tool system; 410: first portion; 410A: bendable portion; 410B: first main surface; 410C: second main surface; 411: first portion first zone; 412: first portion second zone; 413: first portion third zone; 414: first portion fourth zone; 415: first portion fifth zone; 416: first portion sixth zone; 417: first portion seventh zone; 418: first portion eighth zone; 419: first portion ninth zone; 420: second portion; 420A: bendable portion; 420B: third main surface; 420C: fourth main surface; 421: second portion first zone; 422: second portion second zone; 423: second portion third zone; 424: second portion fourth zone; 425: second portion fifth zone; 426: second portion sixth zone; 430: first connecting portion; 440: third portion; 440A: mounting surface; 450: second connecting portion; 460: fourth portion; 470: third connecting portion; A: rotation axis; L_{A}: perpendicular line; L_{B}: perpendicular line; d₁: depth; d₂: depth; α: first direction; β: plane; γ: connecting direction; and θ: angle.

## Claims

1. A rotating tool comprising:
a shaft portion extending from a first end to a second end along a rotation axis;
a sensor unit disposed on the shaft portion; and
a cutting edge disposed around the rotation axis of the shaft portion;
the sensor unit including a sensor module, the sensor module including a first sensor that detects a first physical quantity of the shaft portion, a base member, and an antenna that is mounted on a first surface of the base member and externally transmits a signal containing information on the first physical quantity detected by the first sensor;
the antenna being a chip antenna or a PCB antenna,
in a cross section including the rotation axis, a first direction as a direction perpendicular to the first surface being inclined with respect to a plane perpendicular to the rotation axis and with respect to the rotation axis.

2. The rotating tool according to claim 1, wherein an angle formed by the plane perpendicular to the rotation axis and the first direction is not less than 5 degrees and not more than 85 degrees.

3. The rotating tool according to claim 1, wherein an angle formed by the plane perpendicular to the rotation axis and the first direction is not less than 15 degrees and not more than 75 degrees.

4. The rotating tool according to any one of claims 1 to 3, wherein an angle formed by the plane perpendicular to the rotation axis and the first direction is not less than 20 degrees and not more than 70 degrees.

5. The rotating tool according to any one of claims 1 to 4, wherein the base member is a board.

6. The rotating tool according to any one of claims 1 to 5, wherein the first sensor is a strain sensor.

7. The rotating tool according to claim 6, wherein the first sensor is arranged to detect a strain in a direction along the rotation axis.

8. The rotating tool according to any one of claims 1 to 7, wherein
the sensor unit further includes a housing that houses the sensor module,
the housing includes
a tubular side wall portion surrounding the shaft portion and extending in a direction along the rotation axis,
a bottom wall portion closing a first opening of the side wall portion in the direction along the rotation axis, and
an upper wall portion closing a second opening of the side wall portion located on an opposite side from the first opening in the direction along the rotation axis, and
at least one of the bottom wall portion and the upper wall portion is at least partially made of a resin.

9. A rotating tool system comprising:
the rotating tool according to any one of claims 1 to 8; and
a receiver including a linear antenna that receives the signal containing the information on the first physical quantity transmitted from the antenna.

10. A sensor device capable of configuring a sensor unit of a rotating tool, the rotating tool including a shaft portion extending from a first end to a second end along a rotation axis, the sensor unit disposed on the shaft portion, and a cutting edge disposed around the rotation axis of the shaft portion, the sensor device comprising:
a sensor module, the sensor module including a first sensor that detects a first physical quantity of the shaft portion, a base member, and an antenna that is mounted on a first surface of the base member and externally transmits a signal containing information on the first physical quantity detected by the first sensor;
the antenna being a chip antenna or a PCB antenna,
in a cross section including the rotation axis, a first direction as a direction perpendicular to the first surface being inclined with respect to a plane perpendicular to the rotation axis and with respect to the rotation axis.

11. A sensor device comprising a shaft region extending along a rotation axis, a sensor unit disposed on the shaft region, and a connecting portion formed at an end of the shaft region in a direction along the rotation axis and allowing a machining unit having a cutting edge to be connected thereto,
the sensor unit including a sensor module, the sensor module including a first sensor that detects a first physical quantity of the shaft region, a base member, and an antenna that is mounted on a first surface of the base member and externally transmits a signal containing information on the first physical quantity detected by the first sensor,
the antenna being a chip antenna or a PCB antenna,
in a cross section including the rotation axis, a first direction as a direction perpendicular to the first surface being inclined with respect to a plane perpendicular to the rotation axis and with respect to the rotation axis.
